Europäisches Patentamt

European Patent Office

Office européen des brevets

(19)

(11) EP 1 536 432 A1

(12) **EUROPEAN PATENT APPLICATION**
published in accordance with Art. 158(3) EPC

(43) Date of publication:
01.06.2005 Bulletin 2005/22

(21) Application number: 03736048.4

(22) Date of filing: 05.06.2003

(51) Int Cl.[7]: **H01F 10/193**, G02F 1/09, G02B 27/28

(86) International application number:
PCT/JP2003/007161

(87) International publication number:
WO 2003/105162 (18.12.2003 Gazette 2003/51)

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 07.06.2002 JP 2002166803

(71) Applicant: Japan Science and Technology Agency
Kawaguchi-shi, Saitama 332-0012 (JP)

(72) Inventors:
• YOSHIDA, Hiroshi
Kawanishi-shi, Hyogo 666-0111 (JP)
• ARAKI, Kazuya
Minoh-shi, Osaka 562-0031 (JP)
• SATO, Kazunori
Minoh-shi, Osaka 562-0004 (JP)

(74) Representative: Röthinger, Rainer, Dipl.-Phys.
c/o Wuesthoff & Wuesthoff
Patent- und Rechtsanwälte
Schweigerstrasse 2
81541 München (DE)

(54) **FERROMAGNETIC IV GROUP BASED SEMICONDUCTOR, FERROMAGNETIC III-V GROUP BASED COMPOUND SEMICONDUCTOR, OR FERROMAGNETIC II-IV GROUP BASED COMPOUND SEMICONDUCTOR, AND METHOD FOR ADJUSTING THEIR FERROMAGNETIC CHARACTERISTICS**

(57) Disclosed is a ferromagnetic group IV-based semiconductor or a ferromagnetic group III-V-based or group II-VI-based compound semiconductor, comprising a group IV-based semiconductor or a group III-V-based or group II-VI-based compound semiconductor, which contains at least one rare-earth metal element selected from the group consisting of Ce, Pr, Nd, Pm, Sm, Eu, Gd, Tb, Dy, Ho, Er, Tm, Yb and Lu. The ferromagnetic characteristic of the ferromagnetic semiconductor is controlled by adjusting the concentration of the rare-earth metal element, combining two or more of the rare-earth metal elements or adding a p-type or n-type dopant. The present invention can provide a ferromagnetic group IV-based semiconductor or a ferromagnetic group III-V-based or group II-VI-based compound semiconductor which exhibits light transparency and stable ferromagnetic characteristics.

FIG.2

Description

## TECHNICAL FIELD

The present invention relates to a single-crystal ferromagnetic group IV-based semiconductor or a single-crystal ferromagnetic group III-V-based or II-VI-based compound semiconductor, which has ferromagnetic properties achieved by adding at least one rare-earth metal element selected from the group consisting of Ce, Pr, Nd, Pm, Sm, Eu, Gd, Tb, Dy, Ho, Er, Tm, Yb and Lu, to a group IV-based semiconductor or a group III-V-based or group II-VI-based compound semiconductor, which is transparent to light having a wavelength in the range of the infrared to ultraviolet regions, so as to form a mixed crystal of them. The present invention also relates to a method for adjusting a ferromagnetic characteristic of the ferromagnetic semiconductor.

## BACKGROUND ART

The realization of a single-crystal ferromagnetic thin film having both light transparency and ferromagnetic properties will open the way for obtaining optical isolators or optically assisted high-density magnetic recording essential for mass communication, and preparing electromagnetic materials required for future mass communication. Thus, it is desired to provide a material having both light transparency and ferromagnetic properties.

A group IV-based semiconductor, such as diamond, or a group III-V-based or group II-VI-based compound semiconductor exhibits the property of being transparent to light having a wavelength in the range of the infrared to ultraviolet regions, based on their large bandgap [diamond (Eg = 5.4 eV), ZnSe (Eg = 2.7 eV), ZnO (Eg = 3.3 eV), ZnS (Eg = 3.9 eV), GaN (Eg = 3.3 eV), AlN (Eg = 6.4 eV), BN (Eg = 6.4 eV)], and has a high exciton binding energy. Thus, if ferromagnetic properties can be given to these semiconductors, the obtained ferromagnetic semiconductor will lead to major progress in an optical device for spin electronics, such as an optical quantum computer utilizing coherent spin states.

The inventors previously filed a patent application for invention concerning a transition metal-containing ferromagnetic ZnO-based compound and a method of adjusting ferromagnetic characteristics thereof (Japanese Patent Laid-Open Publication No. 2001-130915).

However, neither ferromagnetic states achieved in a group III-V-based or group II-VI-based compound semiconductor doped with rare-earth metal, nor ferromagnetic states achieved in a group III-V-based or group II-VI-based compound semiconductor having a high ferromagnetic transition temperature (Curie point) has been reported. Further, in the field of silicon technologies, any silicon exhibiting ferromagnetic properties has not been reported. The realization of a silicon material having ferromagnetic properties will also provide a wider application range thereof.

## DISCLOSURE OF INVENTION

As mentioned above, if stable ferromagnetic properties are obtained in a group IV-based semiconductor or a group III-V-based or group II-VI-based compound semiconductor, the obtained ferromagnetic semiconductor can be used in combination with a light-emitting element, such as a semiconductor laser, comprising a group IV-based semiconductor or a group III-V-based or group II-VI-based compound semiconductor having a high exciton binding energy, and allows for a significantly extended application range of magnetooptic spin-based electronic devices utilizing magnetooptic effects.

Further, in cases where the obtained ferromagnetic semiconductor is used in a ferromagnetic memory utilizing the change in magnetization state to be induced by light irradiation, the ferromagnetic semiconductor has to be prepared to have desired ferromagnetic characteristics, for example, a ferromagnetic transition temperature (Curie temperature) adjusted at a value (slightly greater than a room temperature) which allows the magnetization state to be changed by light irradiation.

In view of the above circumstances, it is an object of the present invention to provide a ferromagnetic group IV-based semiconductor or a ferromagnetic group III-V-based or group II-VI-based compound semiconductor to be obtained using a group IV-based semiconductor or a group III-V-based or group II-VI-based compound semiconductor which is transparent to light.

It is another object of the present invention to provide a method for adjusting a ferromagnetic characteristic, e.g. ferromagnetic transition temperature, of a ferromagnetic group IV-based semiconductor or a ferromagnetic group III-V-based or group II-VI-based compound semiconductor, in the process of preparing the ferromagnetic group IV-based semiconductor or the ferromagnetic group III-V-based or group II-VI-based compound semiconductor.

The inventors have been dedicated to researches for obtaining a single crystal with ferromagnetic properties using a group IV-based semiconductor or a group III-V-based or group II-VI-based compound semiconductor which has a wide bandgap suitable, particularly, as a material transparent to light.

During the course of these researches, the inventors found that even if about 1 to 25 at% of metal ion, such as Si in a group IV-based semiconductor, Ga in a group III-V-based compound semiconductor or Zn in a group II-VI-based compound semiconductor, is substituted with at least one rare-earth metal element selected from the group consisting of Ce, Pr, Nd, Pm, Sm, Eu, Gd, Tb, Dy, Ho, Er, Tm, Yb and Lu (to form a mixed crystal of them), at a low temperature through a nonequilibrium crystal growth process, a single crystal can be adequately obtained.

The inventors also found that when at least one rare-earth metal element selected from the group consisting of Ce, Pr, Nd, Pm, Sm, Eu, Gd, Tb, Dy, Ho, Er, Tm, Yb and Lu is added to a group IV-based semiconductor or a group III-V-based or group II-VI-based compound semiconductor to form a mixed crystal of them, a hole or electron is doped into the semiconductor (the number of electrons is increased or reduced) due to the change in electronic state, so as to allow the semiconductor to have ferromagnetic properties.

Further, the inventors found that while a group III-V-based compound semiconductor exhibits no ferromagnetic property by means of the formation of a mixed crystal of Gd added thereto by itself, desired ferromagnetic properties can be obtained therein by co-doping a donor, such as oxygen.

Furthermore, the inventors found that the formation of a mixed crystal by means of adding at least one rare-earth metal element selected from the group consisting of Ce, Pr, Nd, Pm, Sm, Eu, Gd, Tb, Dy, Ho, Er, Tm, Yb and Lu to a group IV-based semiconductor or a group III-V-based or group II-VI-based compound semiconductor provides the same effects as those to be obtained by adding a hole to 4f electrons.

As above, at least one rare-earth metal element selected from the group consisting of Ce, Pr, Nd, Pm, Sm, Eu, Gd, Tb, Dy, Ho, Er, Tm, Yb and Lu can be simply added to a group IV-based semiconductor or a group III-V-based or group II-VI-based compound semiconductor to form a mixed crystal of them, so as to allow the semiconductor to be put into a stable ferromagnetic state.

Through the subsequent continuous researches, the inventors found that each of the rare-earth metals consisting of Ce, Pr, Nd, Pm, Sm, Eu, Gd, Tb, Dy, Ho, Er, Tm, Yb and Lu is put into a high spin state having an electronic spin s = 1/2, 1, 3/2, 2, 5/2, 3 or 7/2, and a ferromagnetic transition temperature of a ferromagnetic semiconductor to be obtained can be adjusted by changing a combination of or the ratio between two or more of these elements, or adding n-type and/or p-type dopants.

The inventors also found that the above technique can be used to provide a more stabilized ferromagnetic state than antiferromagnetic and paramagnetic states, and adjust energy in the ferromagnetic state (for example, an energy for allowing the ferromagnetic state to be generally maintained although a slight difference in the energy causes a spin glass state analogous to an antiferromagnetic state).

Further, the inventors found that the lowest transmission wavelength of the obtained ferromagnetic semiconductor is varied depending on the kind of the aforementioned rare-earth metal elements, and thereby one or more of these elements can be selectively formed as a mixed crystal to allow the obtained ferromagnetic semiconductor to have a desired filter function.

Thus, the concentration and/or mixing ratio of the rare-earth metal elements can be adjusted to provide a single-crystal ferromagnetic group IV-based semiconductor or a single-crystal ferromagnetic group III-V-based or group II-VI-based compound semiconductor, which has desired magnetic characteristics.

Specifically, the present invention provides a ferromagnetic group IV-based semiconductor or a ferromagnetic group III-V-based or group II-VI-based compound semiconductor, comprising a group IV-based semiconductor or a group III-V-based or group II-VI-based compound semiconductor, which contains at least one rare-earth metal element selected from the group consisting of Ce, Pr, Nd, Pm, Sm, Eu, Gd, Tb, Dy, Ho, Er, Tm, Yb and Lu.

The group IV-based semiconductor herein is Si, diamond or Ge. The group III-V-based compound semiconductor is a compound, such as GaAs, GaSb, GaP, GaN, AlN, InN or BN, which is a combination of a group III atom of B, Al, Ga, In or Tl, and a group V atom of N, P, As, Sb or Bi. The group II-VI-based compound semiconductor is a compound, such as ZnSe, ZnS, ZnTe, ZnO, CdS or CdSe, which is a combination of a group II atom of Be, Mg, Zn, Cd, Hg, Ca, Sr or Ba, and a group IV atom of O, S, Se or Te.

Each of the aforementioned rare-earth metal elements has an ionic radius relatively close to that of Zn, Cd, Ga, Al or In. Thus, even if these rare-earth metal elements are added to the semiconductor as a solid solution in an amount of 1 at% to 25 at% at a low temperature through a nonequilibrium crystal growth process, a single-crystal structure of the semiconductor serving as a matrix can be maintained, and the matrix semiconductor can exhibit ferromagnetic properties while maintaining the transparency thereof.

Each of the above rare-earth metal elements selected from the group consisting of Ce, Pr, Nd, Pm, Sm, Eu, Gd, Tb, Dy, Ho, Er, Tm, Yb and Lu is different in the atomic level of their 4f atom and the amplitude of p-f hybridization. Thus, when at least two or more of these rare-earth metal elements are contained in the above semiconductor, the ferromagnetic characteristics of the semiconductor can be more directly varied as compared with hole-doping or electron-doping, so as to adjust a ferromagnetic characteristic, such as ferromagnetic transition temperature.

While the doping of at least one of an n-type dopant and a p-type dopant does not provide a direct effect as that between the rare-earth metal elements because it is incorporated into the matrix of the group IV-based semiconductor or the group III-V-based or group II-VI-based compound semiconductor, the dopant can act on a 4f electron adjacent to an atom constituting the group IV-based semiconductor or group III-V-based or group II-VI-based compound semiconductor so as to change the state of hole or electron to adjust the ferromagnetic characteristic.

The present invention also provides a method of adjusting a ferromagnetic characteristic of a ferromagnetic group IV-based semiconductor or a ferromagnetic group III-V-based or group II-VI-based compound semiconductor, which comprises adding either one of:

(1) at least two rare-earth metal elements selected from the group consisting of Ce, Pr, Nd, Pm, Sm, Eu, Gd, Tb, Dy, Ho, Er, Tm, Yb and Lu;
(2) the at least two rare-earth metal elements, and at least one metal element selected from the group consisting of Th, Pa, U, Np, Pu, Am, Cm, Bk, Cf, Es, Fm, Md, No and Lr; and
(3) the above (I) or (2), and at least one of an n-type dopant and a p-type dopant, to a group IV-based semiconductor or a group III-V-based or group II-VI-based compound semiconductor so as to adjust the ferromagnetic characteristic according to a combination of the rare-earth metal elements.

Further, the present invention provides a method of adjusting a ferromagnetic characteristic of a ferromagnetic group IV-based semiconductor or a ferromagnetic group III-V-based or group II-VI-based compound semiconductor, which comprises adding either one of:

(1) at least one rare-earth metal element selected from the group consisting of Ce, Pr, Nd, Pm, Sm, Eu, Gd, Tb, Dy, Ho, Er, Tm, Yb and Lu;
(2) the at least one rare-earth metal element, and at least one metal element selected from the group consisting of Th, Pa, U, Np, Pu, Am, Cm, Bk, Cf, Es, Fm, Md, No and Lr; and
(3) the above (1) or (2), and at least one of an n-type dopant and a p-type dopant, to a group IV-based semiconductor or a group III-V-based or group II-VI-based compound semiconductor, and controlling the concentration of one of the at least one rare-earth metal element, the at least one metal element selected from the group consisting of Th, Pa, U, Np, Pu, Am, Cm, Bk, Cf, Es, Fm, Md, No and Lr, and the at least one of an n-type dopant and a p-type dopant so as to adjust the ferromagnetic characteristic.

Specifically, according to the above methods, a ferromagnetic transition temperature as one of ferromagnetic characteristics can be adjusted.

In the above method, at least one or more of the rare-earth metal elements and at least one or more of the actinide elements described in the (2) may be added to form a mixed crystal so as to adjust an energy in a ferromagnetic state, and allow the energy to be reduced as a whole according to a kinetic energy of a hole or electron introduced from the rare-earth metal elements by themselves, to stabilize said ferromagnetic state.

Further, at least one or more of the rare-earth metal elements and at least one or more of the actinide elements described in the (2) may be added to form a mixed crystal so as to control the magnitude and the positive/negative sign of the magnetic interaction between the rare-earth metal atoms according to a hole or electron introduced from the rare-earth metal elements by themselves, to stabilize said ferromagnetic state.

Furthermore, at least one or more of the rare-earth metal elements and at least one or more of the actinide elements described in the (2) may be added to form a mixed crystal so as to control the magnitude and the positive/negative sign of the magnetic interaction between the rare-earth metal atoms and a light transmission characteristic to be obtained from the mixed crystallization of the rare-earth metal elements and the actinide elements, according to a hole or electron introduced from the rare-earth metal elements by themselves, to provide a desired light filter characteristic in the ferromagnetic group IV based semiconductor the ferromagnetic group III-V-based or the group II-VI-based compound semiconductor.

The rare-earth metal-containing magnetic semiconductor of the present invention can emit sharp light reflecting the magnetic states without variation in temperature, and the emission may be utilized to generate circularly polarized light.

In observation of a temperature dependence of the wavelength of emission induced by excitation using ultraviolet light, the emission wavelength is not varied at all in the range of liquid helium temperatures to room temperatures. The no-variation with the temperature would result from a sharp energy level in the ground state and in the excited state of electrons in the 4-f shell, and negligible influences of lattice vibrations and a humidity dependence of the matrix semiconductor. In conventional optical communications using emission from an AlGaSb light-emitting element, it is required to use a Peltier element or the like because of occurrence of variation in wavelength due to temperature change. The semiconductor of the present invention capable of generating light emission without any variation in wavelength due to temperature change is suitable for high-performance optical communications.

The 4f-electron state of a rare-earth metal ion belonging to lanthanoid elements except for La having no 4f electron has a large electronic spin in a high spin state, and an orbital angular momentum spin based on orbital angular momentum. Further, there is 1 eV (equivalent to 8000 K) of strong ferromagnetic spin interaction between 4f electrons and 5d electrons which are valence electrons. Thus, such a rare-earth metal can be added to the semiconductor as a solid solution to stabilize a ferromagnetic state, in which an impurity band formed in the bandgap of the semiconductor and partly occupied by electrons to have a narrow bandwidth and a large electron correlation energy is utilized to achieve a ferromagnetic state based on the gain of band energy.

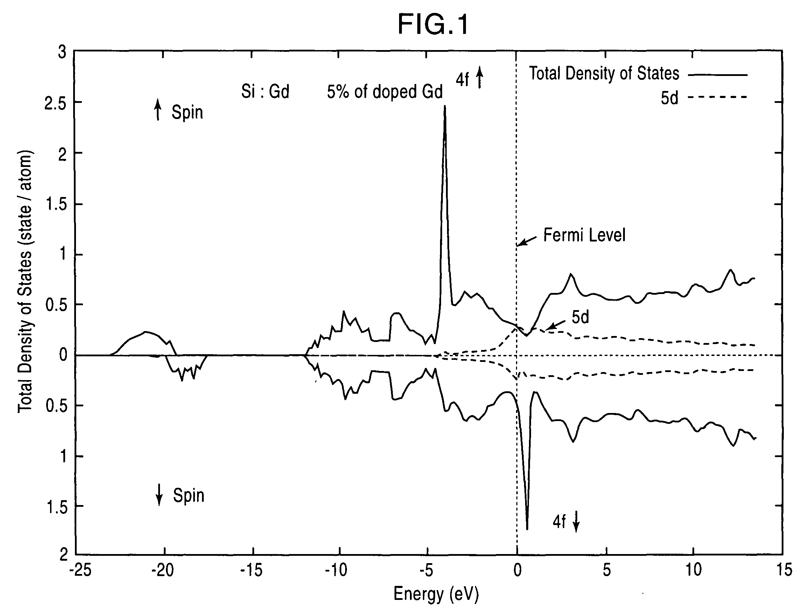

FIG. 1 shows the total density of states and a partial density of states at 5d in a case where 5 at% of Gd is doped in Si. As seen in FIG. 1, in the total density of states with the up spin↑ and the down spin ↓, a sharp peak is generated in the 4f-electron state, and a large exchange splitting occurs between the up spin↑ and the down spin ↓ to achieve a ferromagnetic state having a large magnetic moment.

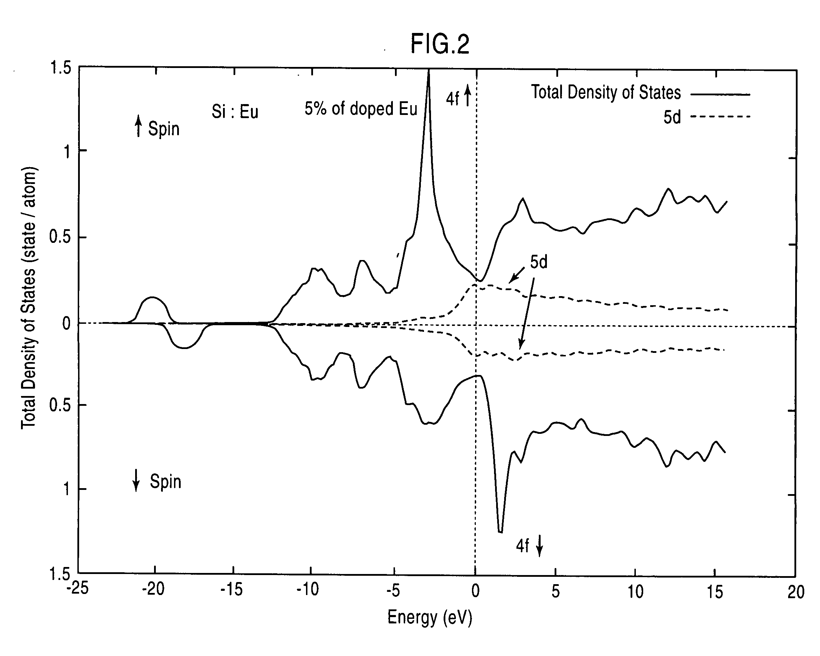

FIG. 2 shows the total density of states and a partial density of states at 5d in a case where 5 at% of Eu is doped in Si. As seen in FIG. 2, in the total density of states with the up spin↑ and the down spin ↓, a sharp peak is generated in the 4f-electron state, and a large exchange splitting occurs between the up spin↑ and the down spin ↓ to achieve a ferromagnetic state having a large magnetic moment.

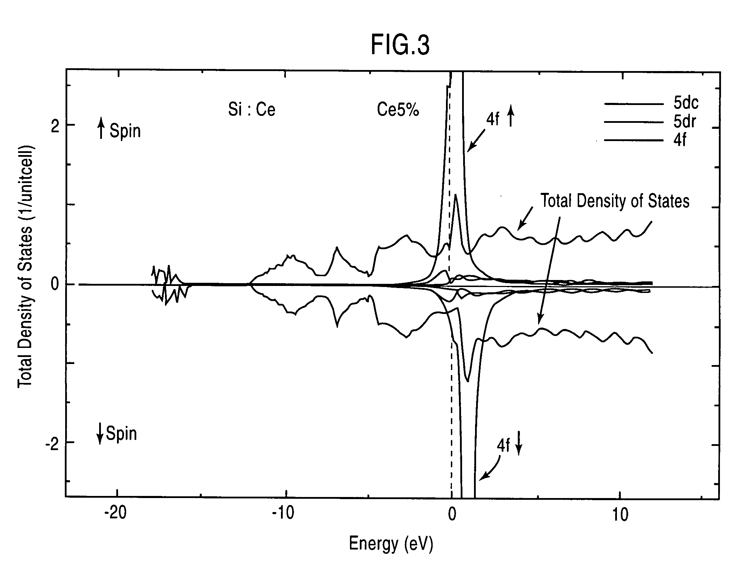

FIG. 3 shows the total density of states and a partial density of states at 5d in a case where 5 at% of Ce is doped in Si. As seen in FIG. 3, in the total density of states with the up spin↑ and the down spin ↓, a sharp peak is generated in the 4f-electron state, and a large exchange splitting occurs between the up spin↑ and the down spin ↓ to achieve a ferromagnetic state having a large magnetic moment.

According to the present invention, the kind and/or concentration of the rare-earth elements can be adjusted to obtain a transparent ferromagnetic semiconductor which allows visible light to pass therethrough and has a high ferromagnetic transition temperature of greater than room temperatures or 400 K or more, using AlN or GaN. The phenomenon that the circular polarization direction of light is rotated by ferromagnetism when the light passes through a transparent material is referred to as "Kerr effect". A ferromagnetic semiconductor providing a larger rotation angle is more excellent in performance as a device, such as optical isolators, utilizing magnetooptic effects. In Eu-doped or Gd + O-doped GaN or AlN, the following large Kerr rotation angle (at room temperatures, 3 mm thickness) can be obtained in the visible region.

| | |
|---|---|
| GaN : Eu (10 at%) | --------- 120 degree |
| AlN : Eu (8 at%) | --------- 105 degree |
| GaN : Gd (5 at%) + O (5 at%) | --------- 110 degree |
| AlN : Gd (10 at%) + O (10 at%) | --------- 130 degree |

For example, Eu substituted for Ga site of GaN or Al site of AlN becomes $Eu^{3+}$, and a ferromagnetic transition temperature can be largely controlled through such electron-doping. The value of Kerr rotation angle can also be controlled in the range of zero to about 150 degrees by adjusting the concentration of Eu impurity and the amount of electron-doping.

Extremely high magnetooptic effects to be obtainable through the Kerr effect have potential for providing a higher performance in memories or computers using magnetooptic light or optical isolators. In cases where a transition metal is contained in the aforementioned semiconductor, the transition between 3d electrons provides light emission having a wide continuous energy spectrum and a wavelength to be largely varied according to temperature change. By contrast, in case of the rare-earth metals, the transition occurs between 4f electrons, and thereby the resulting emission advantageously has a sharp spectrum and a wavelength to be never varied relative to temperature, which is significantly valuable to future data communication utilizing spin electronics.

## BRIEF DESCRIPTION OF DRAWINGS

FIG. 1 shows an electron density of states in a ferromagnetic state of Gd in Si.
FIG. 2 shows an electron density of states in a ferromagnetic state of Eu in Si.
FIG. 3 shows an electron density of states in a ferromagnetic state of Ce in Si.
FIG. 4 is a graph showing the difference ΔE between the total energy in an antiferromagnetic spin glass state and the total energy in a ferromagnetic state in a case where a rare-earth metal, such as Gd, Tb or Dy, is added to Si to form a mixed crystal of them.
FIG. 5 is a schematic diagram showing an MBE apparatus as an example of an apparatus for forming a ferromagnetic silicon thin film.
FIG. 6 is a graph showing the variation in ferromagnetic transition temperature when the concentration of a rare-earth metal to be added to Si to form a mixed crystal of them.

FIG. 7 is a graph showing the variation in ferromagnetic transition temperature when the ratio between two or more of rare-earth metal elements to be formed as a mixed crystal.

FIG. 8 is an explanatory diagram showing the change in magnetic state when Ge is added together with n-type and p-type dopants.

FIG. 9 is a graph showing a ferromagnetic transition temperature of a ferromagnetic semiconductor in Example 1.

FIG. 10 is a graph showing a ferromagnetic transition temperature of a ferromagnetic semiconductor in Example 2.

FIG. 11 is a graph showing a ferromagnetic transition temperature of a ferromagnetic semiconductor in Example 3.

## BEST MODE FOR CARRYING OUT THE INVENTION

With reference to the drawings, a ferromagnetic group IV-based semiconductor or a ferromagnetic group III-V-based or group II-VI-based compound semiconductor of the present invention, and a method for adjusting a ferromagnetic characteristic thereof, will now be described. A ferromagnetic group IV-based semiconductor or a ferromagnetic group III-V-based or group II-VI-based compound semiconductor of the present invention comprises a group IV-based semiconductor or a group III-V-based or group II-VI-based compound semiconductor, which contains at least one rare-earth metal element selected from the group consisting of Ce, Pr, Nd, Pm, Sm, Eu, Gd, Tb, Dy, Ho, Er, Tm, Yb and Lu.

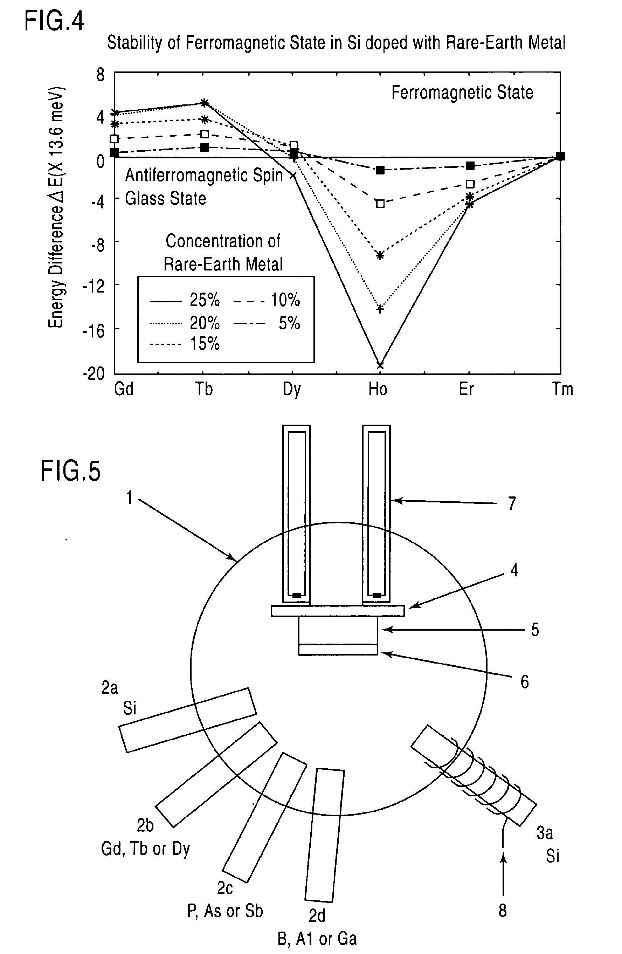

The following description will be made, mainly, in connection with a case where Si is used as IV-based semiconductor. In a process for obtaining a ferromagnetic material using Si as IV-based semiconductor, a 4f electron of the rare-earth metal element, such as Gd, Tb or Dy, is strongly p-f-hybridized with the 3p electron of Si serving as a matrix semiconductor. Thus, as seen in FIG. 4 showing the difference $\Delta E$ between the total energy in an antiferromagnetic spin glass state and the total energy in a ferromagnetic state, the IV-based semiconductor exhibits ferromagnetic properties only by adding the rare-earth metal element by itself thereto to form a mixed crystal of them instead of inducing an antiferromagnetic spin glass state.

FIG. 4 shows an example where the mixed crystal ratio of the rare-earth metal element to Si is 5 at%. However, even if the mixed crystal ratio is several at%, the semiconductor can exhibit ferromagnetic properties. Otherwise, even if the mixed crystal ratio is increased up to 5 at%, the crystallinity of the ferromagnetic material will not be deteriorated. The mixed crystal ratio is preferably set in the range of 1 at% to 100%, more preferably in the range of 5 at% to 25 at% to obtain desired ferromagnetic properties. The number of the rare-earth metal elements is not limited to one, but two or more of the rare-earth metal elements may be formed as a mixed crystal (alloyed) as described later.

FIG. 5 is a schematic diagram showing an MBE apparatus as an example of an apparatus for forming a Si-based thin film containing these rare-earth metal elements. This apparatus comprises a substrate holder 4 disposed in a chamber 1 capable of maintaining an extra-high vacuum of about $1.33 \times 10^{-6}$ Pa, a substrate 5 made of Si, SiC, sapphire or the like and held by the substrate holder 4, and a heater 7 for heating the substrate 5.

A cell 2a receiving therein Si as a material (source) constituting a compound to be grown, a cell 2b receiving therein at least one rare-earth metal element selected from the group consisting of Ce, Pr, Nd, Pm, Sm, Eu, Gd, Tb, Dy, Ho, Er, Tm, Yb and Lu (while FIG. 5 shows a single cell, two or more of the cells are provided when two or more of the rare-earth metals are subjected to mixed crystallization), a cell 2c receiving therein an n-type dopant, such as P, As or Sb, a cell 2d receiving therein a p-type dopant, such as B, Al or Ga, and an RF radical cell 3a for generating radical Si. Solid materials of the Si and the rare-earth metal may be put in a cell in the form of a compound of Si and rare-earth metal, and then the compound may be vaporized in an atomic state.

Each of the cells 2a to 2d receiving therein the respective solids (elemental substances) is provided with means (not shown) for heating the solid source to vaporize it in an atomic state. The radical cell 3a is designed to activate the atomized sources using an RF (high-frequency) coil 8. Each of the Si, rare-earth metal element and n-type dopant is use after vaporizing a corresponding solid source having a purity of 99.99999 %, in an atomic state. The atomic state of the Si or the rare-earth metal element may be obtained by irradiating a corresponding molecular gas with an electromagnetic wave in the microwave region.

Then, a Si thin film 6 is grown at a temperature of 350 to 800°C while supplying the n-type dopant of P, Sb or As at a flow volume of $1.33 \times 10^{-5}$ Pa, the p-type dopant of B, Al or Ga in an atomic state at a flow volume of 6.65 $\times 10^{-5}$ Pa, and the rare-earth metal element, such as Gd, Tb or Dy, in an atomic state at a flow volume of $1.33 \times 10^{-5}$ Pa, all together onto the substrate 5, to provide a Si thin film 6 formed as a mixed crystal containing the rare-earth metal element.

In the above example, the n-type and p-type dopants are doped. By contrast, in the aforementioned example of FIG. 4 and after-mentioned examples of Tables 1 and 2, only Gd, Tb or Dy is doped without any doping of these dopants.

As seen in FIG. 4, the Si thin film formed as a mixed crystal containing Gd, Tb or Dy has a large difference between the energy in the anti-ferromagnetic spin glass state and the energy in ferromagnetic state, specifically, 4.08 (2.04) $\times$ 13.6 meV (in the case of Gd), 5.14 (2.57) $\times$ 13.6 meV(in the case of Tb), or 1.10 (0.55) $\times$ 13.6 meV (in the case of Dy), and exhibits ferromagnetic properties.

While the rare-earth metal element is doped in Si in the above example, it may also be doped in a group III-V-based nitride, such as GaN, to obtain a ferromagnetic single crystal, because GaN is different from Si only in that its bandgap energy is greater than that of Si, and any group III-V-based nitride other than GaN has a four-coordinate structure similar to and difference only in bandgap energy from that of GaN.

However, in a case where 5 at% of Gd is doped in the semiconductor, a desired ferromagnetic material can be obtained only if 1 at% or more, preferably 3 at% or more of oxygen is doped as a donor to dope an n-type carrier in the semiconductor. Further, in a case where 10 at% of Gd is doped in the semiconductor, a desired ferromagnetic material can be obtained only if 2 at% or more, preferably 5 at% or more of oxygen is doped as a donor to dope an n-type carrier in the semiconductor.

In the ferromagnetic Si of the present invention which is formed as a mixed crystal containing the rare-earth metal element, while an Si atom is substituted with the rare-earth metal element, such as $Gd^{3+}$, $Tb^{3+}$ or $Dy^{3+}$, the ferromagnetic Si matrix can be maintained in a diamond structure. In addition, the aforementioned rare-earth metal element, such as Gd, Tb or Dy, has an electronic structure capable of increasing holes, and thereby stabilizes in a stable ferromagnetic state without any modification, as shown in FIG. 4. Further, as seen from the after-mentioned Tables 1 and 2, this ferromagnetic Si has a large magnetic moment. Specifically, a Si-based compound containing Gd, Tb or Dy has a magnetic moment (Bohr magneton) of 7 µB (Gd), 9 µB (Tb) or 10 µB (Dy). Thus, the present invention can provide a ferromagnetic magnet having extremely strong magnetism.

The variation in magnetic characteristic to be caused by changing the concentration of the rare-earth metal element was checked as follows. In addition to the aforementioned Si-based compound containing the rare-earth metal element at a concentration of 25 at%, Si-based compounds containing the rare-earth metal element at 5, 10, 15 and 20 at% were prepared, and their magnetic moment ($\times$ 9.247 J/T) and ferromagnetic transition temperature (°K) were measured. The magnetic moment and ferromagnetic transition temperature were determined by measuring a magnetic susceptibility using a SQUID (superconducting quantum interference device).

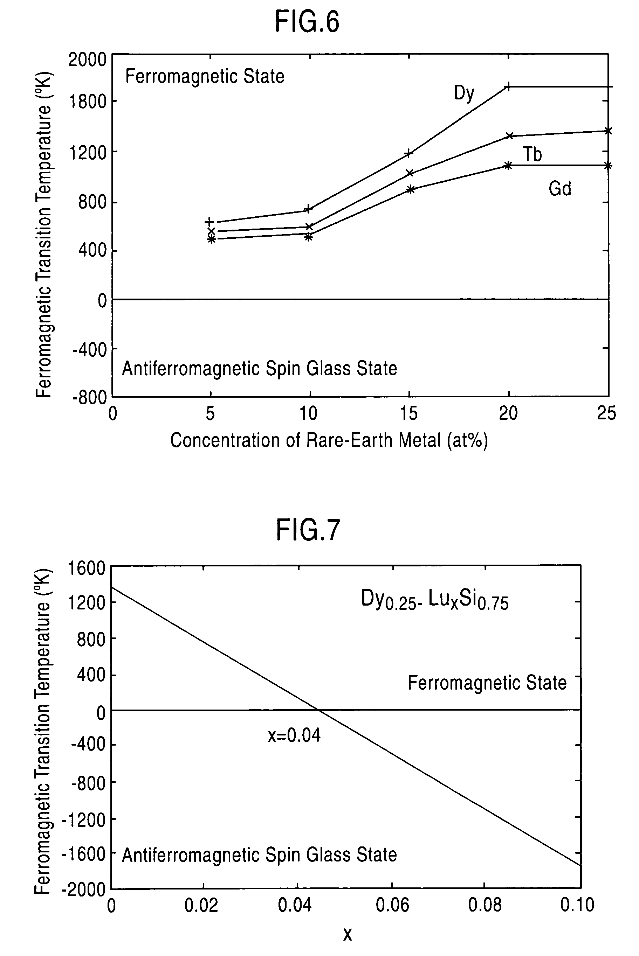

The measurement results are shown in Tables 1 and 2. As seen in Tables 1 and 2, the ferromagnetic transition temperature is apt to be increased as the mixed crystal ratio (the concentration) is increased, and is increased approximately in proportion to the mixed crystal ratio. This relationship is shown in FIG. 6. It is also proved that the ferromagnetic interaction between spins is increased along with the increase in concentration of the rare-earth metal element.

(Table 1)

| Type of Rare-Earth Metal | Concentration of Rare-Earth Metal (at%) | Magnetic Moment (µB) | Ferromagnetic Transition Temperature (°K) |
|---|---|---|---|
| Gd | 5 | 6.98 | 455 |
| Tb | 5 | 8.97 | 468 |
| Dy | 5 | 9.45 | 512 |

(Table 2)

| Type of Rare-Earth Metal | Concentration of Rare-Earth Metal (at%) | Magnetic Moment (µB) | Ferromagnetic Transition Temperature (°K) |
|---|---|---|---|
| Gd | 25 | 6.85 | 690 |
| Tb | 25 | 8.87 | 860 |
| Dy | 25 | 9.40 | 880 |

As described above, the rare-earth metal element is put into a high spin state which has an electronic spin s = 7/2 and an orbital angular momentum L = 0 for Gd, an electronic spin s = 3 and an orbital angular momentum L = 3 for Tb, or an electronic spin s = 5/2 and an orbital angular momentum L = 5 for Dy. Further, as seen in Tables 1 and 2, and FIG. 6, the interaction between ferromagnetic spins and the ferromagnetic transition temperature can be controllably adjusted by changing the concentration of the rare-earth metal element. From a practical standpoint, the ferromagnetic transition temperature is preferably arranged to be 300°K or more.

The inventors also found that two or more of the rare-earth metal elements can be added to the semiconductor to form a mixed crystal of them, so as to adjust the state of holes or electrons, and obtain the respective magnetic characteristics of the two or more rare-earth metal elements together. For example, a combination of Lu and either one of Gd, Tb or Dy was added to Si to form a mixed crystal of them. In a case where the conditions that the total concentration of Dy and Lu was set at 25 at%, and x was variously changed to form $Dy_{0.25-x} Lu_x Si_{0.75}$, the ferromagnetic transition temperature could be largely varied, and set at zero °K when x = 0.04, as shown in FIG. 7.

The ferromagnetic transition temperature can be set at desired value by selectively arranging x in the range of 0 to 0.10. In the same manner, a combination of Lu and Tb may be added to Si to form $Tb_{0.25-x} Lu_x Si_{0.75}$ while variously changing x. Further, various magnetic moments can also be obtained, but not shown, by changing the mixing ratio of the above two rare-earth metal elements.

In the above examples, two or more of the rare-earth metal elements are doped to adjust the ferromagnetic characteristic. Alternatively, at least one rare-earth metal element selected from the aforementioned group, and at least one metal element selected from the group consisting of Th, Pa, U, Np, Pu, Am, Cm, Bk, Cf, Es, Fm, Md, No and Lr, which belong to actinide elements except for Ac having no 5f electron, may be doped. In this case, the magnetic moment and/or the ferromagnetic transition temperature can also be adjusted by changing the respective concentrations of the rare-earth metal element and the actinide element.

Further, an n-type dopant or a p-type dopant may be doped to change the amount of holes or electrons so as to adjust the ferromagnetic characteristic.

In this case, the n-type or p-type dopant is incorporated into the conduction band or valence band of Si to act on the 4f electron of the rare-earth metal element adjacent to the conduction or valence band. Thus, while all of added dopants do not always act on the 4f electron, at least a part of the dopants surely act on the 4f electron to change the ferromagnetic state including the ferromagnetic transition temperature.

For example, the doping of an n-type dopant is equivalent to supplying an electron. Thus, the doping of an n-type dopant in combination with the mixed crystallization of either one of Gd, Tb, Dy and Lu has the same effect as that in the aforementioned example of adding Lu and either one of Gd, Tb and Dy.

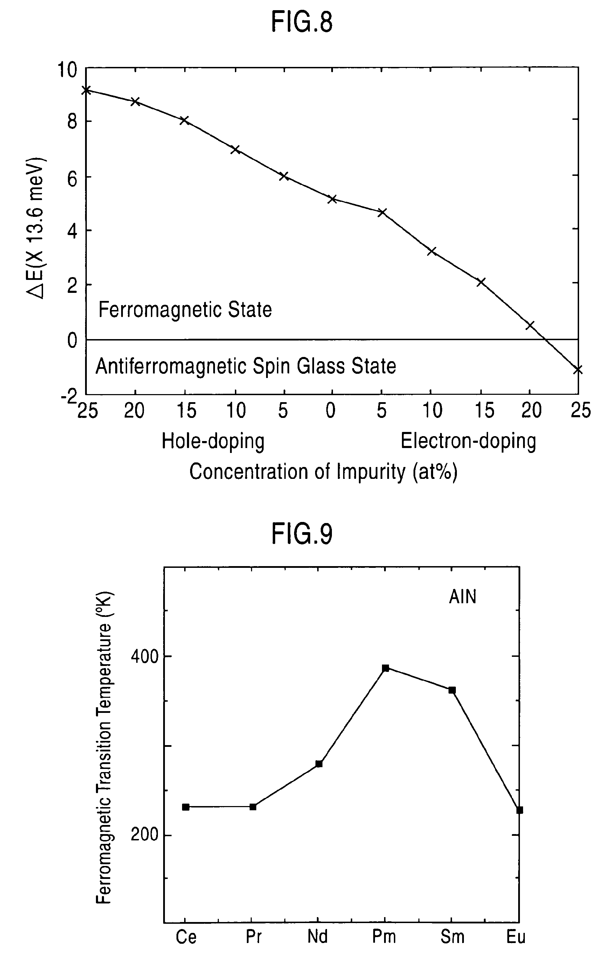

FIG. 8 shows the relationship between $\Delta E$ and the concentration (at%) of impurity where Gd, which exhibits a significant change in $\Delta E$ = (energy in the antiferromagnetic spin glass state) - (energy in the ferromagnetic state) in response to the doping of an n-type or p-type dopant (electron or hole), is added to Si to form a mixed crystal of them, and the impurity is additionally doped therein.

As seen in FIG. 8, the ferromagnetic state is stabilized by introducing a hole, and vanished by doping an electron. Thus, the ferromagnetic characteristic can be adjusted by doping the n-type or p-type dopant. While the rare-earth metal element, such as Gd, Tb or Dy, originally exhibits ferromagnetic properties, or does not have such a large change $\Delta E$ between the antiferromagnetic spin glass state and the ferromagnetic state, the doping of the n-type or p-type dopant allows the ferromagnetic state as in FIG. 8 so as to adjust the ferromagnetic transition temperature.

Differently from the aforementioned adjustment through the mixed crystallization of two or more of the rare-earth metal elements, in the adjustment using the n-type or p-type dopant, the magnetic moment itself is maintained at a value determined by the rare-earth metal element added to Si to form a mixed crystal of them.

Either one of P, As and Sb may be used as the n-type dopant, and a compound of Si and either one of these elements may be used as a material to be doped. Preferably, the concentration of the donor is $1 \times 10^{18}$ cm$^{-3}$. For example, the donor doped at a concentration of about $10^{20}$ to $10^{21}$ cm$^{-3}$ is equivalent to the aforementioned rare-earth metal element added at a mixed crystal ratio of 1 to 10 at%. As described above, either one of B, Al and Ga may be used as the p-type dopant.

The lowest transmission wavelength of light to pass through the ferromagnetic material is varied depending on the kind or type of the rare-earth material to be added to the group IV-based semiconductor or a group III-V-based or group II-VI-based compound semiconductor which is a wide bandgap semiconductor, and can be adjusted by adding two or more of the rare-earth materials to the semiconductor to form a mixed crystal of them so as to provide a light filter for cutting off light having a wavelength less than a desired wavelength. For example, a ferromagnetic group III-V-based nitride (GaN) transparent to light having a desired wavelength can be obtained. The lowest wavelength of light to pass through each of ferromagnetic nitrides prepared by adding 5 at% of each of the aforementioned rare-earth metal elements to GaN to form a mixed crystal of them were measured as shown in Table 3, wherein 5 at% of oxygen is doped in the case of Gd. According to this example, a ferromagnetic magnet transparent to light having a desired wavelength can be obtained.

(Table 3)

| Type of Rare-earth metal | Concentration of Rare-earth metal (at%) | Lowest wavelength (nm) |
| --- | --- | --- |
| GaN : Gd | 5 | 420 |
| GaN : Tb | 5 | 380 |
| GaN : Dy | 5 | 370 |

As mentioned above, according to the present invention, an energy in the ferromagnetic state can be changed as a whole by a kinetic energy of a hole or electron introduced from the added rare-earth metal element by themselves and others, and the level of the energy can be reduced by adjusting the concentration of the hole or electron, so as to stabilize the ferromagnetic state. Thus, the hole or electron can be introduced to controllably change the magnitude and the positive/negative sign of the magnetic interaction between the rare-earth metal atoms so as to stabilize the ferromagnetic state.

While the MBE (Molecular Beam Epitaxy) apparatus is used in the above embodiment to form a thin film containing the rare-earth metal element, an MOCVD (Metalorganic Chemical Vapor Deposition) apparatus may be used to form the same thin film. In this case, the metal material, such as Ga, Al or the rare-earth metal, is introduced in the MOCVD apparatus in the form of an organic metal compound, such as dimethyl gallium or dimethyl aluminum.

The MBE or MOCVD process can be used to form a thin film in a nonequilibrium state while doping a transition metal element or the like therein at a desired concentration. However, the thin film growth method is not limited to these processes, but the thin film may be formed through any other suitable process, such as a laser abrasion process using solid targets of solid Ga nitride, solid Al nitride and rare-earth metal to form a thin film while applying an activated dopant onto a substrate.

Further, when the rare-earth metal element or its oxide is used as the doping material, an ECR (Electron Cyclotron Resonance) plasma device adapted to electronically excite the doping material using radio wave, laser, X-ray or electron beam, to put it into an atomic state may be used. The ECR plasma device may also be used for the n-type and p-type dopants. The ECR plasma device can be advantageously used to allow such a material to be doped in an atomic state at a high concentration.

[EXAMPLES]

(Example 1)

FIG. 9 shows a ferromagnetic transition temperature of a ferromagnetic semiconductor prepared by doping 5 at% of the rare-earth metal in AlN. As seen in FIG. 9, the obtained ferromagnetic semiconductor could exhibit a high ferromagnetic transition temperature of greater than room temperatures or 300 K or more, which was adjusted by selecting the type of the rare-earth metal, and a transparency to visible light. Further, it was experimentally proved that the ferromagnetic transition temperature (Tc) is proportional to the root of the concentration (C) of the rare-earth metal to be mixed ($Tc \propto \sqrt{C}C$).

(Example 2)

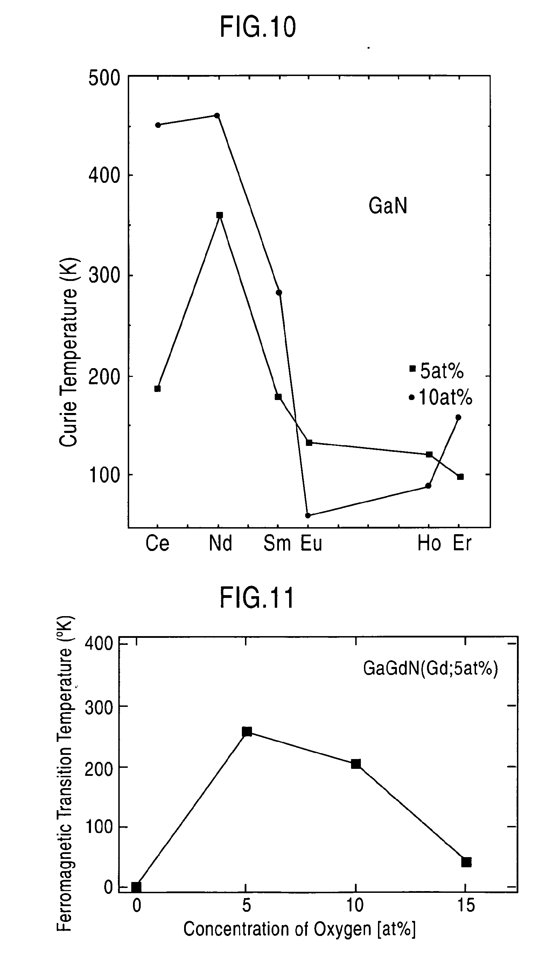

FIG. 10 shows a ferromagnetic transition temperature of each of two ferromagnetic semiconductors prepared by doping 5 at% and 10 at% of the rare-earth metal in GaN. As seen in FIG. 10, each of the obtained ferromagnetic semiconductors .could exhibit a high ferromagnetic transition temperature of greater than room temperatures or 400 K or more, which was adjusted by selecting the type of the rare-earth metal, and a transparency to visible light.

(Example 3)

FIG. 11 shows the concentration of a donor and a ferromagnetic transition temperature of a ferromagnetic semiconductor prepared by doping 5 at% of Gd in GaN while changing the concentration of oxygen doped therein as the donor. As seen in FIG. 11, while the ferromagnetic semiconductor prepared by doping only 5 at% of Gd in GaN exhibits no ferromagnetic property, oxygen as the donor can be additionally doped to provide desired the ferromagnetic properties, and the concentration of the donor can be changed to adjust the ferromagnetic transition temperature.

**INDUSTRIAL APPLICABILITY**

According to the present invention, at least one rare-earth metal element selected from the group consisting of Ce, Pr, Nd, Pm, Sm, Eu, Gd, Tb, Dy, Ho, Er, Tm, Yb and Lu can be simply contained in a group IV-based semiconductor or a group III-V-based or group II-VI-based compound semiconductor to obtain a ferromagnetic single crystal having high magnetooptic effects and a high ferromagnetic transition temperature of greater than room temperatures. Thus, the obtained ferromagnetic single crystal can be combined with existing ZnO or transparent conductive oxide (TCO) for use as an n-type or p-type transparent electrode, or an optical fiber, and applied to an quantum computer or large-capacity magnetooptical recording, or to high-performance data communication or quantum computer as an optical electronic material usable in the range of the visible to ultraviolet regions.

In addition, based on the intra 4f-electron shell transition in the rare-earth metal element, the ferromagnetic semiconductor of the present invention can emit light having a constant wavelength without any variation due to temperature change up to room temperatures. Thus, the ferromagnetic semiconductor of the present invention can be adjusted to be a p-type or n-type semiconductor which is applicable to a transparent ferromagnetic semiconductor or a circularly polarized light-emitting device (spin-based semiconductor laser) which has extremely high magnetooptic effects.

**Claims**

1. A ferromagnetic group IV-based semiconductor or a ferromagnetic group III-V-based or group II-VI-based compound semiconductor, comprising a group IV-based semiconductor or a group III-V-based or group II-VI-based compound semiconductor, which contains at least one rare-earth metal element selected from the group consisting of Ce, Pr, Nd, Pm, Sm, Eu, Gd, Tb, Dy, Ho, Er, Tm, Yb and Lu.

2. The ferromagnetic group IV-based semiconductor or the ferromagnetic group III-V-based or group II-VI-based compound semiconductor as defined in claim 1, which is doped with at least one of an n-type dopant and a p-type dopant.

3. A ferromagnetic group III-V-based compound semiconductor comprising a group III-V-based compound semiconductor, which contains Gd and a donor.

4. The ferromagnetic group III-V-based compound semiconductor as defined in claim 3, which is doped with at least one of an n-type dopant and a p-type dopant.

5. A magnetooptic spin electronic device comprising the ferromagnetic semiconductor as defined in either one of claims 1 to 4, said device being adapted to utilize a magnetooptic effect of said ferromagnetic semiconductor.

6. A method of adjusting a ferromagnetic characteristic of a ferromagnetic group IV-based semiconductor or a ferromagnetic group III-V-based or group II-VI-based compound semiconductor, comprising adding either one of:

   (1) at least two rare-earth metal elements selected from the group consisting of Ce, Pr, Nd, Pm, Sm, Eu, Gd, Tb, Dy, Ho, Er, Tm, Yb and Lu;
   (2) said at least two rare-earth metal elements, and at least one metal element selected from the group consisting of Th, Pa, U, Np, Pu, Am, Cm, Bk, Cf, Es, Fm, Md, No and Lr; and
   (3) said (1) or (2), and at least one of an n-type dopant and a p-type dopant, to a group IV-based semiconductor or a group III-V-based or group II-VI-based compound semiconductor, so as to adjust said ferromagnetic characteristic according to a combination of said rare-earth metal elements.

7. The method as defined in claim 6, wherein said ferromagnetic characteristic is a ferromagnetic transition temperature.

8. The method as defined in claim 6, which includes adding said at least two rare-earth metal elements to said group IV-based semiconductor or group III-V-based or group II-VI-based compound semiconductor to form a mixed crystal of them, so as to adjust an energy in a ferromagnetic state, and allow the energy to be reduced as a whole according to a kinetic energy of a hole or electron introduced from said rare-earth metal elements by themselves, to stabilize said ferromagnetic state.

9. The method as defined in claim 6, which includes adding said at least two rare-earth metal elements to said group IV-based semiconductor or group III-V-based or group II-VI-based compound semiconductor to form a mixed crystal of them, so as to control the magnitude and the positive/negative sign of the magnetic interaction between the rare-earth metal atoms, and a light transmission characteristic to be obtained from said mixed crystallization of said rare-earth metal elements, according to a hole or electron introduced from said rare-earth metal elements by themselves, to provide a desired light filter characteristic in said ferromagnetic semiconductor.

10. A method of adjusting a ferromagnetic characteristic of a ferromagnetic group IV-based semiconductor or a ferromagnetic group III-V-based or group II-VI-based compound semiconductor, comprising adding either one of:

   (1) at least one rare-earth metal element selected from the group consisting of Ce, Pr, Nd, Pm, Sm, Eu, Gd, Tb, Dy, Ho, Er, Tm, Yb and Lu;

(2) said at least one rare-earth metal element, and at least one metal element selected from the group consisting of Th, Pa, U, Np, Pu, Am, Cm, Bk, Cf, Es, Fm, Md, No and Lr; and

(3) said (1) or (2), and at least one of an n-type dopant and a p-type dopant, to a group IV-based semiconductor or a group III-V-based or group II-VI-based compound semiconductor, so as to control the concentration of one of said at least one rare-earth metal element, said at least one metal element selected from the group consisting of Th, Pa, U, Np, Pu, Am, Cm, Bk, Cf, Es, Fm, Md, No and Lr, and said at least one of an n-type dopant and a p-type dopant, to adjust said ferromagnetic characteristic.

11. The method as defined in claim 10, wherein said ferromagnetic characteristic is a ferromagnetic transition temperature.

12. The method as defined in claim 10, which includes:

providing at least two of said rare-earth metal elements; and

adding said at least two rare-earth metal elements to said group IV-based semiconductor or group III-V-based or group II-VI-based compound semiconductor to form a mixed crystal of them, so as to adjust an energy in a ferromagnetic state, and allow the energy to be reduced as a whole according to a kinetic energy of a hole or electron introduced from said rare-earth metal elements by themselves, to stabilize said ferromagnetic state.

13. The method as defined in claim 10, which includes:

providing at least two of said rare-earth metal elements; and

adding said at least two rare-earth metal elements to said group IV-based semiconductor or group III-V-based or group II-VI-based compound semiconductor to form a mixed crystal of them, so as to control the magnitude and the positive/negative sign of the magnetic interaction between the rare-earth metal atoms and a light transmission characteristic to be obtained from said mixed crystallization of said rare-earth metal elements, according to a hole or electron introduced from said rare-earth metal elements by themselves, to provide a desired light filter characteristic in said ferromagnetic semiconductor.

## FIG.1

EP 1 536 432 A1

# FIG.2

EP 1 536 432 A1

# FIG.3

## FIG.4

**Stability of Ferromagnetic State in Si doped with Rare-Earth Metal**

## FIG.5

# FIG.6

# FIG.7

## FIG.8

ΔE(X 13.6 meV)

Ferromagnetic State

Antiferromagnetic Spin Glass State

Hole-doping    Electron-doping

Concentration of Impurity (at%)

## FIG.9

AIN

Ferromagnetic Transition Temperature (°K)

Ce   Pr   Nd   Pm   Sm   Eu

## FIG.10

## FIG.11

<div align="center">

**INTERNATIONAL SEARCH REPORT**

</div>

| International application No. |
| --- |
| PCT/JP03/07161 |

**A. CLASSIFICATION OF SUBJECT MATTER**
Int.Cl$^7$ H01F10/193, G02F1/09, G02B27/28

According to International Patent Classification (IPC) or to both national classification and IPC

**B. FIELDS SEARCHED**

Minimum documentation searched (classification system followed by classification symbols)
Int.Cl$^7$ H01F10/193, H01F1/00, G02F1/09, G02B27/28

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2001-108951 A (Zaidan Hojin Rikogaku Shinkokai), 20 April, 2001 (20.04.01), Full text; all drawings (Family: none) | 1–13 |
| Y | JP 3-11703 A (International Business Machines Corp.), 21 January, 1991 (21.01.91), Full text; all drawings & DE 69008770 C & EP 400263 A1 & US 5294287 A1 & US 5296048 A1 & US 5321527 A1 | 1–13 |

☒ Further documents are listed in the continuation of Box C.  ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>05 August, 2003 (05.08.03) | Date of mailing of the international search report<br>19 August, 2003 (19.08.03) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.

PCT/JP03/07161

C (Continuation). DOCUMENTS CONSIDERED TO BE RELEVANT

| Category* | Citation of document, with indication, where appropriate, of the relevant passages | Relevant to claim No. |
|---|---|---|
| Y | JP 49-17184 A (Siemens AG.),<br>15 February, 1974 (15.02.74),<br>Full text; all drawings<br>& BE 797601 A      & NL 7304197 A<br>& LU 67326 A      & FR 2178183 A<br>& DE 2215878 A      & IT 981646 B<br>& GB 1413431 A | 1-13 |
| Y | JP 48-73798 A (Siemens AG.),<br>04 October, 1973 (04.10.73),<br>Full text<br>& LU 66780 A      & BE 793545 A<br>& NL 7215983 A      & DE 2165588 A<br>& FR 2165984 A      & IT 971888 B<br>& GB 1388707 A | 1-13 |

Form PCT/ISA/210 (continuation of second sheet) (July 1998)